# EUROPÄISCHE PATENTSCHRIFT

(11) **EP 3 211 761 B1**
(45) Veröffentlichungstag und Bekanntmachung des Hinweises auf die Patenterteilung: **25.03.2020**
(21) Anmeldenummer: 17157824.8
(22) Anmeldetag: 24.02.2017
(51) Int. Cl.: H02K 1/20, H02K 1/32, H02K 5/20, H02K 9/06

(54) **LUFTGEKÜHLTE ELEKTRISCHE MASCHINE**
AIR COOLED ELECTRIC MACHINE
MOTEUR ÉLECTRIQUE REFROIDI PAR AIR

(30) Priorität: 24.02.2016 AT 501332016
(43) Veröffentlichungstag der Anmeldung: 30.08.2017
(73) Patentinhaber: Traktionssysteme Austria GmbH, 2351 Wiener Neudorf (AT)
(72) Erfinder: NEUDORFER, Harald, 2514 Traiskirchen (AT); WEBER, Christian, 1040 Wien (AT)
(74) Vertreter: Sonn & Partner Patentanwälte

(56) Entgegenhaltungen:
- EP-A2- 2 086 091
- DE-A1-102011 087 273
- US-A- 2 494 200
- US-A1- 2004 150 270
- US-A1- 2008 193 275
- US-B1- 6 570 276
- US-B2- 7 994 667

## Beschreibung

Die Erfindung betrifft eine luftgekühlte elektrische Maschine mit einem mit einer Rotorwelle drehfest verbundenen Rotor mit axial angeordneten Rotorkühlkanälen, einem Stator mit axial angeordneten Statorkühlkanälen, einem Gehäuserohr, beiderseits angeordneten Lagerschilden enthaltend die Lager zur drehbaren Aufnahme der Rotorwelle, mit Lufteinlässen und Luftauslässen, und mit beiderseits jeweils einem mit der Rotorwelle verbundenen Lüfter zur Führung der Kühlluft von den Lufteinlässen durch die axialen Rotorkühlkanäle und die axialen Statorkühlkanäle zu den Luftauslässen.

Aus dem Stand der Technik, beispielsweise der US 6 570 276 B1, der FR 2 746 227 A1, der CN 203086307 U, der DE 10 2011 087 273 A1 oder der FR 1 349 625 A sind verschiedene elektrische Maschinen bekannt geworden, bei welchen Ventilatoren mit der Rotorwelle drehfest verbunden sind, und dadurch eine Förderung der Kühlluft beim Betrieb der elektrischen Maschine bewerkstelligt wird.

Bei luftgekühlten elektrischen Maschinen befindet sich meist an der Antriebsseite oder Nichtantriebsseite bzw. an beiden Seiten der Maschine ein Lüfter, der mit der Rotorwelle drehfest verbunden ist und im Betrieb der elektrischen Maschine Kühlluft durch axial angeordnete Kühlkanäle im Stator und bzw. oder Rotor zu leitet und die entstandene Wärme abführt. Beispielsweise beschreibt die AT 508 879 B1 eine luftgekühlte elektrische Maschine mit einem nichtantriebsseitig angeordneten Lüfter.

Die US 7,994,667 B2 beschreibt eine luftgekühlte elektrische Maschine, bei der zumindest ein mit der Rotorwelle verbundener Lüfter vorgesehen ist, der in zwei Axiallüfter aufgeteilt ist, welche die Kühlluft zur Kühlung des Rotors und die Kühlluft zur Kühlung des Stators jeweils in axialer Richtung transportieren. Zur Trennung der Rotorkühlluft von der Statorkühlluft ist eine Trennplatte vorgesehen, welche beispielsweise mit dem Rotor verbunden sein kann. Die Statorkühlluft wird durch radial gerichtete Statorkühlkanäle transportiert, was im Bezug auf die Baugröße der elektrischen Maschine ungünstig ist.

Für eine ausreichende Kühlung ist es notwendig, eine ausreichende Luftmenge durch die Kühlkanäle der elektrischen Maschine zu fördern. Die geförderte Luftmenge ist proportional zum Durchmesser des Lüfters. Mit Erhöhung des Durchmessers des Lüfters steigen jedoch auch die Geräusche des Lüfters, was in der Praxis vermieden werden soll.

Darüber hinaus kommt es bei luftgekühlten elektrischen Maschinen je nach verwendetem Lüfter zu einer schlechteren Kühlung bestimmter Regionen der elektrischen Maschine, welche durch entsprechende bauliche Maßnahmen oder das Vorsehen einer zusätzlichen Wasserkühlung ausgeglichen werden muss. Beispielsweise wird bei Verwendung eines Radiallüfters zwar der Stator der elektrischen Maschine besser gekühlt, nicht jedoch der Rotor der elektrischen Maschine.

Die Aufgabe der vorliegenden Erfindung besteht in der Schaffung einer oben genannten luftgekühlten elektrischen Maschine mit verbesserter Kühlung und verringerter Lärmentwicklung. Die Nachteile bekannter luftgekühlter elektrischer Maschinen sollen vermieden oder zumindest reduziert werden.

Gelöst wird die erfindungsgemäße Aufgabe dadurch, dass jeder Lüfter durch einen kombinierten Radial-/Axiallüfter gebildet und unterhalb von Wickelköpfen am Stator angeordnet ist, die Statorkühlkanäle durch eine Barriere unterbrochen sind und die Enden der Statorkühlkanäle beiderseits der Barriere mit am Mantel des Gehäuserohrs angeordneten Luftauslässen verbunden sind, sodass die Kühlluft von den Lufteinlässen einer Seite in einer axialen Richtung durch die axialen Rotorkühlkanäle zur anderen Seite und getrennt davon von den Lufteinlässen beiderseits in radialer Richtung über die Wickelköpfe am Stator und in Gegenrichtung durch die axialen Statorkühlkanäle bis zur Barriere und den am Mantel des Gehäuserohrs angeordneten Luftauslässen führbar ist. Es sind also beiderseits der elektrischen Maschine, also sowohl antriebsseitig als auch nichtantriebsseitig Lüfter angeordnet, welche erfindungsgemäß durch einen kombinierten Radial-/Axiallüfter gebildet sind. Unter dem Begriff kombinierter Radial-/Axiallüfter wird ein Lüfter verstanden, der sowohl in radialer als auch axialer Richtung Luft transportiert. Derartige kombinierte Radial-/Axiallüfter können unterschiedlich aufgebaut sein. Dadurch können zur Kühlung der elektrischen Maschine Lüfter mit geringerem Durchmesser verwendet werden, wodurch eine geringere Lärmentwicklung verbunden ist. Ebenso kann gegenüber herkömmlichen luftgekühlten elektrischen Maschinen bei gleich großem Lüfter eine deutlich verbesserte Kühlwirkung erzielt werden. Dadurch dass erfindungsgemäß ein kombinierter Radial-/Axiallüfter zum Einsatz kommt, wird die Kühlluft sowohl axial in Richtung Rotorkühlkanäle als auch radial in Richtung Statorkühlkanäle geführt. Die Kühlung des Rotors und die Kühlung des Stators erfolgt getrennt voneinander bzw. durch getrennte Kühlluftströme, welche durch die Axiallüfter bzw. Radiallüfter verursacht werden. Dadurch dass sowohl an der Antriebsseite als auch an der Nichtantriebsseite jeweils ein Lüfter angeordnet ist, welche die Kühlluft in Gegenrichtung durch die Statorkühlkanäle fördern, wird in den Statorkühlkanälen eine Barriere vorgesehen, von der die Kühlluft zu Luftauslässen am Mantel des Gehäuserohrs geleitet wird. Durch die axialen Rotorkühlkanäle wird die Kühlluft in einer Richtung geführt, wobei ein Lüfter die Kühlluft durch die Rotorkühlkanäle bläst und der andere Lüfter die Kühlluft aus den Rotorkühlkanälen saugt. Bei Umkehr der Drehrichtung der elektrischen Maschine wird eine umgekehrte Kühlrichtung in den axialen Rotorkühlkanälen erzielt, wohingegen die Richtung der Kühlluft durch die Statorkühlkanäle jeweils gegenläufig in Richtung der Barriere beibehalten wird. Dadurch, dass unterhalb der Wickelköpfe am Stator beiderseits der elektrischen Maschine Lüfter angeordnet werden und diese durch kombinierte Radial-/Axiallüfter gebildet sind, können zur Förderung der Kühlluft geringere Durchmesser der Lüfter verwendet werden, wodurch sich diese unterhalb der Wickelköpfe am Stator anordnen lassen. Dadurch wird einerseits die Wärmeentwicklung aufgrund des geringeren Durchmessers der Lüfter verringert, und andererseits die axiale Baugröße der elektrischen Maschine durch die Lüfter nicht oder nicht wesentlich erhöht.

Vorteilhafterweise sind die Lüfter durch jeweils einen außenliegenden, ringförmigen Radiallüfter mit einer kreisförmigen Öffnung und einen in dieser kreisförmigen Öffnung des Radiallüfters angeordneten Axiallüfter gebildet. Dies stellt eine einfache Realisierungsmöglichkeit eines derartigen kombinierten Radial-/Axiallüfters dar.

Bei einer Anwendung der luftgekühlten elektrischen Maschine als Antriebsmotor für Schienenfahrzeuge, bei welcher beide Drehrichtungen ausgeführt werden, weist der Radiallüfter vorzugsweise gerade Schaufeln und der Axiallüfter gerade oder gekrümmte Schaufeln auf. Die Radiallüfter mit geraden Schaufeln sind von der Drehrichtung der elektrischen Maschine unabhängig, wodurch bei jeder Drehrichtung der elektrischen Maschine eine Kühlung des Stators gewährleistet ist. Beim Axiallüfter wird unabhängig von der Gestaltung der Schaufeln mit der Drehrichtung zwar die Richtung der durch die axialen Rotorkühlkanäle strömenden Kühlluft geändert, jedoch immer die Kühlung des Rotors gewährleistet.

Bei einer Anwendung der luftgekühlten elektrischen Maschine als Antrieb oder Generator mit nur einer Drehrichtung weist der Radiallüfter vorzugsweise gekrümmte Schaufeln und der Axiallüfter gerade oder gekrümmte Schaufeln auf. Die Radiallüfter mit den gekrümmten Schaufeln bietet für die gewünschte Drehrichtung der elektrischen Maschine eine optimale Kühlung des Stators. Die Kühlung des Rotors wird durch den Axiallüfter, unabhängig davon, ob dieser gerade oder gekrümmte Schaufeln aufweist, gewährleistet.

Alternativ zu der oben erwähnten Ausführungsvariante können die kombinierten Radial-/Axiallüfter auch durch einen Radiallüfter mit entsprechenden Bohrungen zur Erzielung des axialen Kühlluftstroms gebildet sein. Zur Erreichung eines Kühlluftstroms in axialer Richtung werden die beiden Lüfter unterschiedlich dimensioniert, um eine Druckdifferenz zwischen dem antriebsseitigen Lüfter und dem nichtantriebsseitigen Lüfter und in der Folge eine axiale Kühlluftströmung hervorzurufen. Die beiden durch Radiallüfter mit axialen Bohrungen gebildeten Lüfter können unterschiedlichen Außendurchmesser, Innendurchmesser, Breite der Schaufeln, Anzahl der Schaufeln und bzw. oder Krümmung der Schaufeln aufweisen. Auch durch unterschiedliche Belastungen in den beiden Lüftern lässt sich die Druckdifferenz einstellen.

Gemäß einem weiteren Merkmal der Erfindung sind die Lufteinlässe in den Lagerschilden angeordnet. Je nach Drehrichtung der elektrischen Maschine wird die Kühlluft über diese Lufteinlässe in einem der Lagerschilde angesaugt und über die Luftauslässe am anderen Lagerschild bzw. Mantel der elektrischen Maschine abgeführt.

Ein Luftauslass kann in zumindest einem Lagerschild angeordnet sein. Bei einer elektrischen Maschine mit nur einer Drehrichtung, beispielsweise bei der Anwendung eines Generators oder Antriebs mit nur einer gewünschten Drehrichtung, wird der Luftauslass von der gegenüberliegenden Seite des Lufteinlasses angeordnet sein. Bei einer elektrischen Maschine mit wechselnder Drehrichtung wird bei der einen Drehrichtung die Kühlluft über die Lufteinlässe an beiden Lagerschilden angesaugt und am Luftauslass des einen Lagerschilds abgeführt.

Wenn Elemente zum Leiten der Kühlluft vorgesehen sind, kann eine Verbesserung der Kühlung und eine gezielte Leitung der Kühlluft erreicht werden. Derartige Luftleitelemente werden an geeigneten Stellen der elektrischen Maschine angeordnet und allenfalls mit Teilen der elektrischen Maschine einstückig hergestellt bzw. an diesen befestigt, um die Kühlluft gezielt über die zu kühlenden Regionen zu führen und die Wärme entsprechend abzuführen.

Derartige Leitelemente können im Bereich der Lufteinlässe angeordnet sein. Gerade in den Bereichen der Lufteinlässe kann durch entsprechende Luftleitelemente die Kühlluft gezielt dem kombinierten Radial-/Axiallüfter zugeführt werden, von dem sie weitergeleitet wird.

Die Leitelemente können einstückig mit den Lagerschilden hergestellt sein. Dadurch kann der Montageaufwand der elektrischen Maschine reduziert werden.

Die axialen Statorkühlkanäle können durch Nuten an der Oberfläche des Stators gebildet sein. Dies stellt eine einfache Variante der Realisierung der Statorkühlkanäle dar. Die Statorkühlkanäle werden durch die Nuten an der Oberfläche des Stators in Kombination mit dem Gehäuserohr gebildet.

In diesem Fall können die Barrieren in den Statorkühlkanälen durch einen an der Innenseite des Gehäuserohres angeordneten Ring gebildet sein, der in die Nuten, welche die Statorkühlkanäle bilden, hineinragt. Dies stellt bei der Realisierung der Statorkühlkanäle durch Nuten an der Oberfläche des Stators eine einfache Ausführungsvariante zur Bildung der Barrieren in den Statorkühlkanälen dar.

Alternativ oder in Kombination mit den oben genannten Nuten an der Oberfläche des Stators können die Statorkühlkanäle auch durch axiale Nuten an der Innenseite des Gehäuserohres gebildet sein.

Schließlich können die Statorkühlkanäle auch durch Bohrungen im Stator gebildet sein.

Üblicherweise ist der Stator durch Statorbleche gebildet, wobei die Statorkühlkanäle durch Bohrungen in den Statorblechen und die Barriere durch volle Statorbleche gebildet wird.

An den Lagerschilden können Kühlrippen angeordnet sein, um die Wärme besser abführen zu können. Diese Kühlrippen können an den Lagerschilden befestigt oder einstückig mit diesen hergestellt werden.

An den Lufteinlässen und allenfalls Luftauslässen können Filter angeordnet sein, um eine Verschmutzung der elektrischen Maschinen zu verhindern. Derartige Filter können durch mechanische Filter oder auch magnetische Filter, welche magnetisierbaren Staub anziehen, gebildet sein.

Die Lüfter sind vorzugsweise aus Stahl, Aluminium oder einer Aluminiumlegierung gebildet. Derartige Materialien sind aufgrund ihrer Festigkeit und Temperaturbeständigkeit anderen Werkstoffen vorzuziehen.

Das Gehäuserohr und bzw. oder die Lagerschilde sind vorzugsweise aus Aluminium oder einer Aluminiumlegierung durch Gießen hergestellt.

Die Erfindung wird anhand der beigefügten Zeichnungen näher erläutert. Darin zeigen:
- Fig. 1: einen axialen Schnitt durch eine Ausführungsform einer luftgekühlten elektrischen Maschine;
- Fig. 2: einen axialen Schnitt durch den Rotor der luftgekühlten elektrischen Maschine gemäß Fig. 1;
- Fig. 3: einen axialen Schnitt durch den Rotor einer weiteren Ausführungsform einer luftgekühlten elektrischen Maschine;
- Fig. 4: eine Seitenansicht auf die luftgekühlten elektrische Maschine mit dem Gehäuserohr;
- Fig. 5: eine Ansicht auf die Antriebsseite der luftgekühlten elektrischen Maschine in axialer Richtung;
- Fig. 6: eine Ansicht auf eine Ausführungsform des kombinierten Axial-/Radiallüfters;
- Fig. 7a: eine Variante der Bildung der Statorkühlkanäle;
- Fig. 7b: eine alternative Variante der Bildung der Statorkühlkanäle;
- Fig. 8a: der Verlauf der Kühlluft innerhalb der elektrischen Maschine bei einer Drehrichtung; und
- Fig. 8b: der Verlauf der Kühlluft innerhalb der elektrischen Maschine bei einer gegenüber 8a gegenäufigen Drehrichtung.

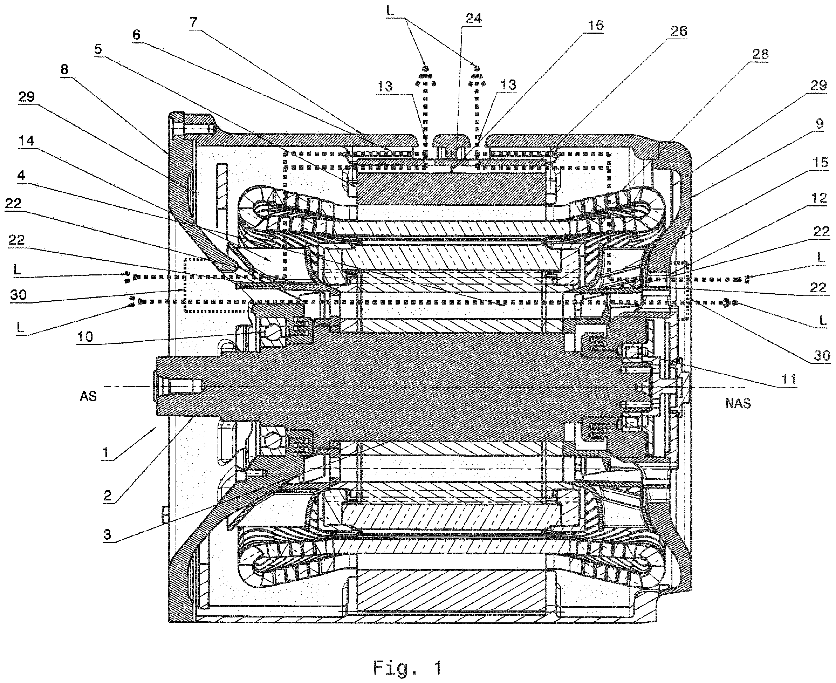

Fig. 1 zeigt einen axialen Schnitt durch die gesamte luftgekühlte elektrische Maschine 1. Die luftgekühlte elektrische Maschine 1 weist einen mit der Rotorwelle 2 drehfest verbundenen Rotor 3 auf, der üblicherweise aus entsprechenden Rotorblechpaketen aufgebaut ist. Im Rotor 3 sind axiale Rotorkühlkanäle 4 zur Führung der Kühlluft L angeordnet. Um den Rotor 3 ist der feststehende Stator 5 angeordnet, der üblicherweise aus Statorblechpaketen besteht. Im Statorpaket 5 sind axiale Statorkühlkanäle 6 angeordnet, in welchen die Kühlluft L zur Abführung der Wärme des Stators 5 geführt wird. Um den Stator 5 ist ein Gehäuserohr 7 angeordnet, welches die luftgekühlte elektrische Maschine 1 umgibt. Beiderseits der elektrischen Maschine 1 sind Lagerschilde 8, 9 vorgesehen, welche die Lager 10, 11 zur drehbaren Aufnahme der Rotorwelle 2 enthalten. Ein mit der Rotorwelle 2 drehfest verbundener Lüfter 14 führt die Kühlluft L von entsprechend angeordneten Lufteinlässen 12 durch die axialen Rotorkühlkanäle 4 und die axialen Statorkühlkanäle 6 zu entsprechenden Luftauslässen 13.

Es sind beiderseits der luftgekühlten elektrischen Maschine 1, also sowohl an der Antriebsseite AS als auch an der Nichtantriebsseite NAS, Lüfter 14, 15 mit der Rotorwelle 2 drehfest verbunden. Darüber hinaus ist erfindungsgemäß jeder Lüfter 14, 15 durch einen kombinierten Radial-/Axiallüfter gebildet, sodass die Kühlluft L sowohl axial durch die Rotorkühlkanäle 4 als auch radial in Richtung der Statorkühlkanäle 6 geführt werden kann. Da die radial abgeführte Kühlluft L beider Lüfter 14, 15 in Gegenrichtung durch die Statorkühlkanäle 6 geführt wird, ist eine Barriere 16 in den Statorkühlkanälen 6 notwendig, welche die Statorkühlkanäle 6 unterbricht und die in gegenläufige Richtung strömende Kühlluft L über entsprechend angeordnete Luftauslässe 13 am Mantel des Gehäuserohrs 7 abführt. Üblicherweise wir die Barriere 16 in der Mitte der Statorkühlkanäle 6 angeordnet sein, um einen symmetrischen Aufbau der luftgekühlten elektrischen Maschine 1 zu erzielen und bei beiden Drehrichtungen der Rotorwelle 2 eine Kühlwirkung zu gewährleisten. Natürlich sind für bestimmte Ausführungsvarianten der luftgekühlten elektrischen Maschine 1 auch andere bevorzugte Stellen für diese Barriere 16 in den Statorkühlkanälen 6 denkbar.

Die Kühlluft L wird von einem Lüfter 14, im dargestellten Ausführungsbeispiel vom Lüfter 14 an der Antriebsseite AS angesaugt und in einer Richtung durch die axialen Rotorkühlkanäle 4 gefördert und vom Lüfter 15 an der Nichtantriebsseite NAS der luftgekühlten elektrischen Maschine 1 von den Rotorkühlkanälen 4 abgesaugt und in axialer Richtung abgeführt. Es muss also gewährleistet sein, dass die Lüfter 14, 15 entsprechend gestaltet sind, sodass die Kühlluft nicht gegenläufig durch die Rotorkühlkanäle 4, sondern in einen Richtung befördert wird.

Bei Änderung der Drehrichtung der luftgekühlten elektrischen Maschine 1 wird die Förderung der Kühlluft L durch die Statorkühlkanäle 6 beibehalten, wohingegen die Richtung der Förderung der Kühlluft L durch die axialen Rotorkühlkanäle 4 umgekehrt wird. Dementsprechend sind an den Lagerschilden 8, 9 der elektrischen Maschine 1 sowohl Lufteinlässe 12 als auch Luftauslässe 13 angeordnet, wohingegen am Mantel des Gehäuserohrs 7 der elektrischen Maschine 1 nur Luftauslässe 13 angeordnet sind.

Zur gezielten Führung der Kühlluft L können Elemente 22 zum Leiten der Kühlluft L vorgesehen sein. Diese sind insbesondere im Bereich der Lufteinlässe 12 bei den Lagerschilden 8, 9 vorteilhaft und allenfalls einstückig mit den Lagerschilden 8, 9 hergestellt.

Dadurch, dass beiderseits der luftgekühlten elektrischen Maschine 1, also sowohl an der Antriebsseite AS und an der Nichtantriebsseite NAS jeweils ein Lüfter 14, 15 angeordnet ist und jeder Lüfter 14, 15 durch einen kombinierten Radial-/Axiallüfter gebildet ist, können die Lüfter 14, 15 mit geringerem Durchmesser ausgeführt werden, wodurch einerseits die Lärmentwicklung reduziert wird, und andererseits die Lüfter 14, 15 unterhalb der Wickelköpfe 28 am Stator 5 angeordnet werden können. Somit wird die axiale Baulänge der luftgekühlten elektrischen Maschine 1 durch die Lüfter 14, 15 nicht vergrößert.

Zur Verbesserung der Kühlwirkung können auch an den Lagerschilden 8, 9 entsprechend gestaltete Kühlrippen 29 angeordnet sein.

Um zu verhindern, dass mit der Kühlluft L Schmutzpartikel angesaugt und durch die axialen Rotorkühlkanäle 4 und axialen Statorkühlkanäle 6 gefördert werden, können vorzugsweise an den Lufteinlässen 12, allenfalls auch an den Luftauslässen 13, entsprechend gestaltete Filter 30 angeordnet sein. Derartige Filter 30 können durch mechanische Filter oder auch magnetisch Filter gebildet werden.

Das Gehäuserohr 7 und bzw. oder die Lagerschilde 8, 9 sind vorzugsweise aus Aluminium oder einer Aluminiumlegierung durch Gießen hergestellt. Die Lüfter 14, 15 werden vorzugsweise aus Stahl, Aluminium oder einer Aluminiumlegierung gebildet.

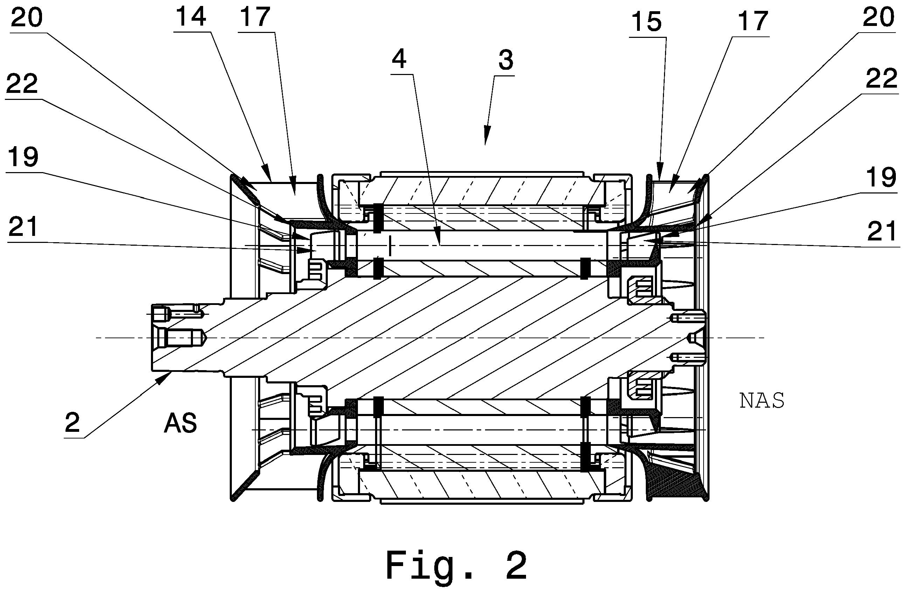

In Fig. 2 ist ein axialer Schnitt durch den Rotor 3 der elektrischen Maschine 1 gemäß Fig. 1 dargestellt. Die Lüfter 14, 15 an der Antriebsseite AS bzw. Nichtantriebsseite NAS der luftgekühlten elektrischen Maschine 1 werden durch kombinierte Radial-/Axiallüfter gebildet, wobei vorzugsweise ein außenliegender ringförmiger Radiallüfter 17 mit geraden oder gekrümmten Schaufeln 20 und ein innenliegender kreisförmiger Axiallüfter 19 mit geraden oder gekrümmten Schaufeln 21 angeordnet wird.

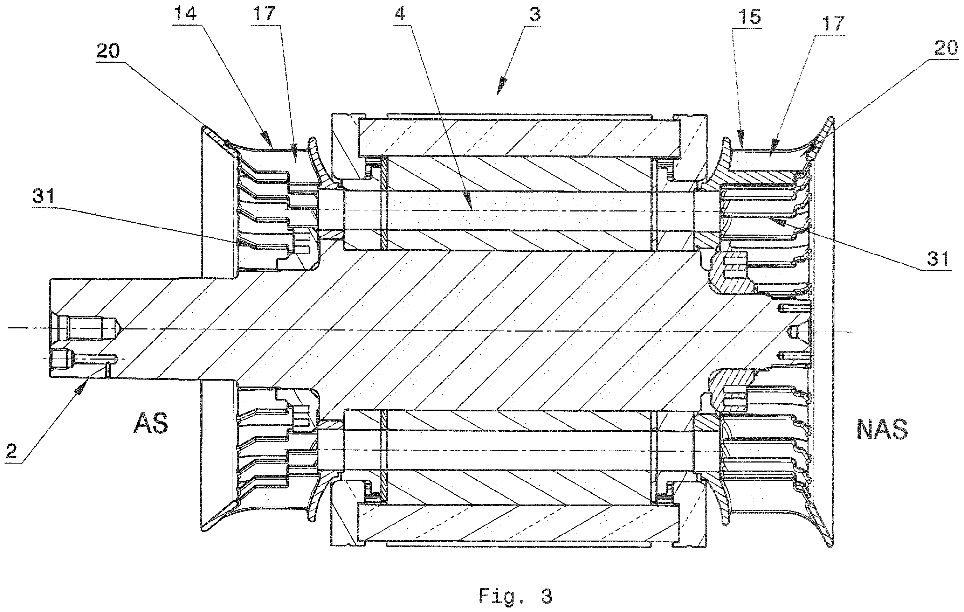

Fig. 3 zeigt einen axialen Schnitt durch den Rotor 3 einer weiteren Ausführungsvariante einer luftgekühlten elektrischen Maschine 1, wobei die Lüfter 14, 15 an der Antriebsseite AS bzw. Nichtantriebsseite NAS durch Radiallüfter 17 mit Bohrungen 31 ausgebildet sind. Die beiden Lüfter 14, 15 sind unterschiedlich ausgeführt, um eine Druckdifferenz zwischen der Antriebsseite AS und der Nichtantriebsseite NAS und somit einen Kühlluftstrom in axialer Richtung hervorzurufen. Die Variationen der beiden Lüfter 14, 15 können in unterschiedlichem Außendurchmesser, unterschiedlichem Innendurchmesser, unterschiedlicher Breite der Schaufeln 20 des Radiallüfters 17, unterschiedlichen Anzahl an Schaufeln 20 und bzw. oder einer unterschiedlichen Krümmung der Schaufeln 20 der Lüfter 14, 15 hergestellt werden.

Auch durch unterschiedliche Ausbildung der Bohrungen 31 in den bieden Lüftern 14, 15 lässt sich ein Druckunterschied zwischen der Antriebsseite AS und Nichtantriebsseite NAS hervorrufen.

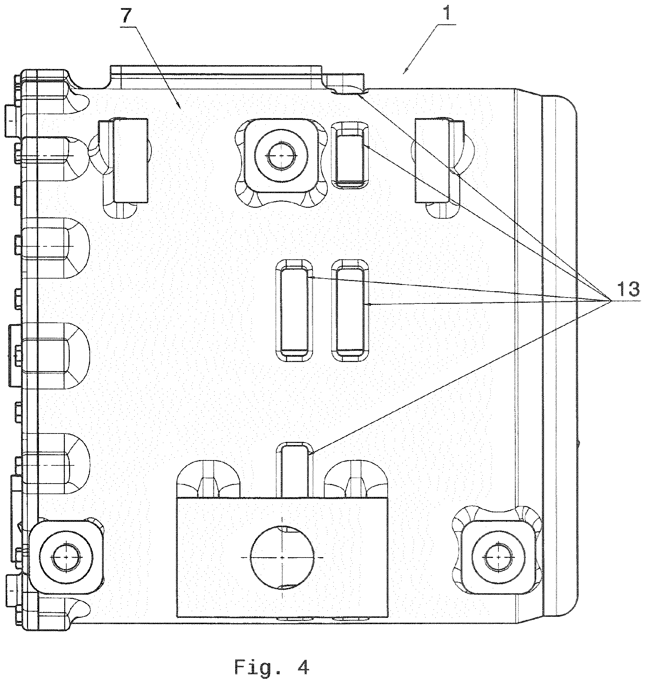

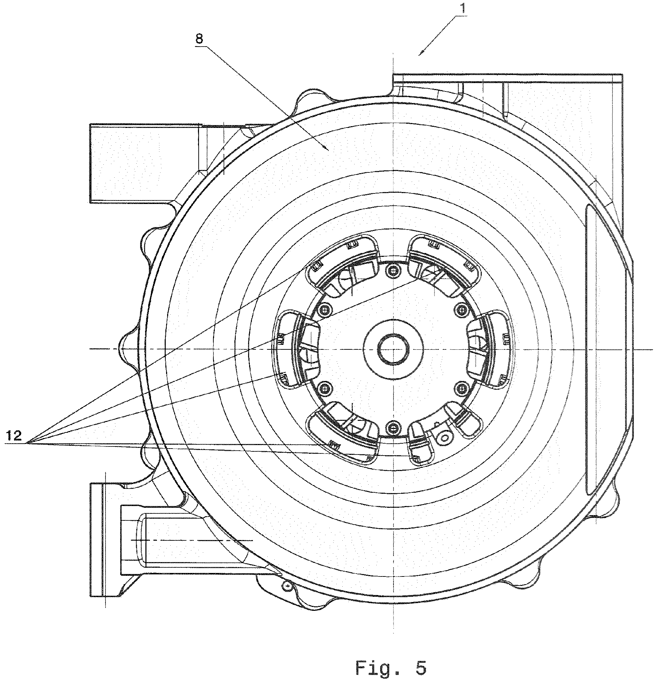

Fig. 4 und 5 zeigen eine Seitenansicht sowie eine Ansicht auf die Antriebsseite AS der elektrischen Maschine 1 mit dem Gehäuserohr 7. Fig. 4 zeigt die Luftauslässe 13 am Gehäuserohr 7 der luftgekühlten elektrischen Maschine 1, welche gegebenenfalls durch Filter 30 (nicht dargestellt) abgedeckt werden können, um einen Eintritt von Schmutzpartikeln in die axialen Statorkühlkanäle 6 zu verhindern. Die Lufteinlässe 12 bzw. je nach Drehrichtung der luftgekühlten elektrischen Maschine 1 allenfalls auch Luftauslässe 13 am Lagerschild 8 sind in Fig. 5 dargestellt. Auch hier können wiederum entsprechende Filter 30 (nicht dargestellt) vor den Lufteinlässen 12 und allenfalls Luftauslässen 13 angeordnet werden.

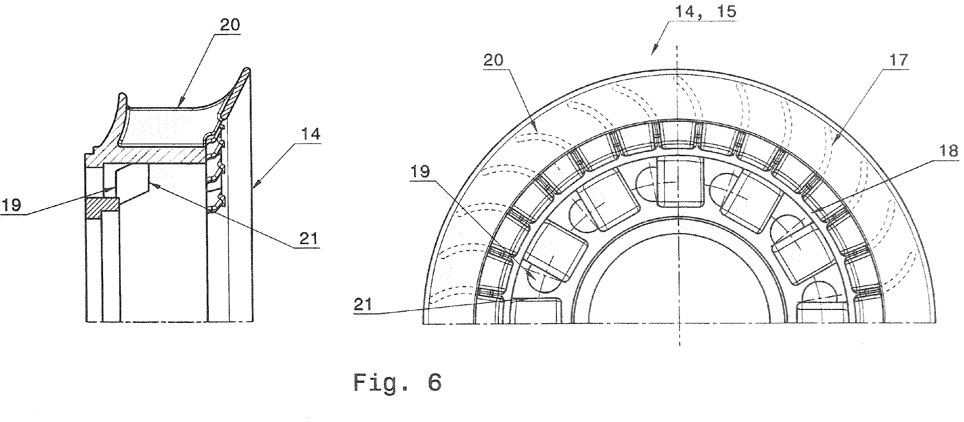

Eine Ausführungsvariante des kombinierten Lüfters 14, 15 ist in Fig. 6 dargestellt, welche eine Ausführungsvariante eines kombinierten Radial-/Axiallüfters 14, 15 in geschnittener Ansicht und Ansicht in axialer Richtung zeigt. Dabei ist der Lüfter 14, 15 durch einen außenliegenden ringförmigen Radiallüfter 17 mit einer kreisförmigen Öffnung 18 und einen in der kreisförmigen Öffnung 18 des Radiallüfters 17 angeordneten Axiallüfter 19 gebildet. Somit kann durch koaxial angeordnete Radiallüfter 17 und Axiallüfter 19 der kombinierte Radial-/Axiallüfter 14, 15 einfach gebildet werden. Der Radiallüfter 17 weist in dieser Ausführungsform gekrümmte Schaufeln 20 auf, wohingegen der Axiallüfter 19 durch gerade Schaufeln 21 gebildet wird. Eine solche Ausführungsform eignet sich für elektrische Maschinen 1 mit nur einer Drehrichtung. Wie bereits erwähnt, wird der Lüfter 14, 15 vorzugsweise aus Stahl, Aluminium oder einer Aluminiumlegierung insbesondere durch Gießen hergestellt.

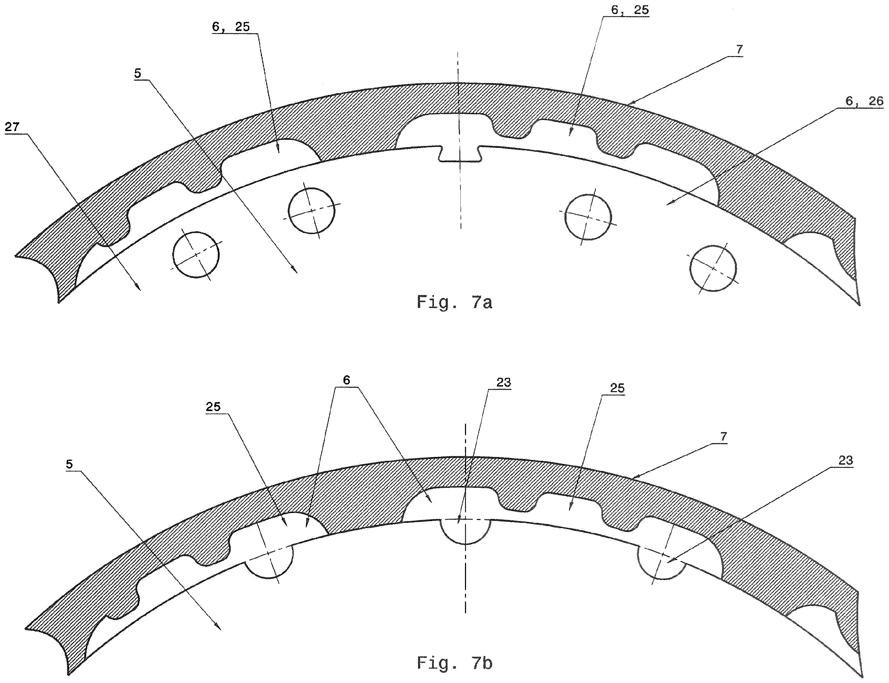

Fig. 7a zeigt eine Variante der Bildung der axial angeordneten Statorkühlkanäle 6 im Stator 5 der luftgekühlten elektrischen Maschine 1. Dabei sind im Stator 5 axial angeordnete Statorkühlkanäle 6 vorgesehen, welche durch entsprechende Bohrungen 26 in den Statorblechen des Stators 5 gebildet werden. Die Barrieren 16 in den Statorkühlkanälen 6 werden durch volle Statorbleche 27 ohne Bohrung 26 gebildet. An der Innenseite des Gehäuserohrs 7 sind Nuten 25 angeordnet, welche weitere axiale Statorkühlkanäle 6 bilden.

Schließlich zeigt Fig. 7b eine alternative Variante der axial angeordneten Statorkühlkanäle 6 im Stator 5 der elektrischen Maschine 1. Bei dieser Ausführungsvariante sind an der Oberfläche des Stators 5 lediglich Nuten 23 angeordnet, welche die axialen Statorkühlkanäle 6 allenfalls zusammen mit weiteren Nuten 25 an der Innenseite des Gehäuserohrs 7 bilden. Natürlich sind auch Kombinationen der Varianten gemäß Fig. 7a und 7b denkbar.

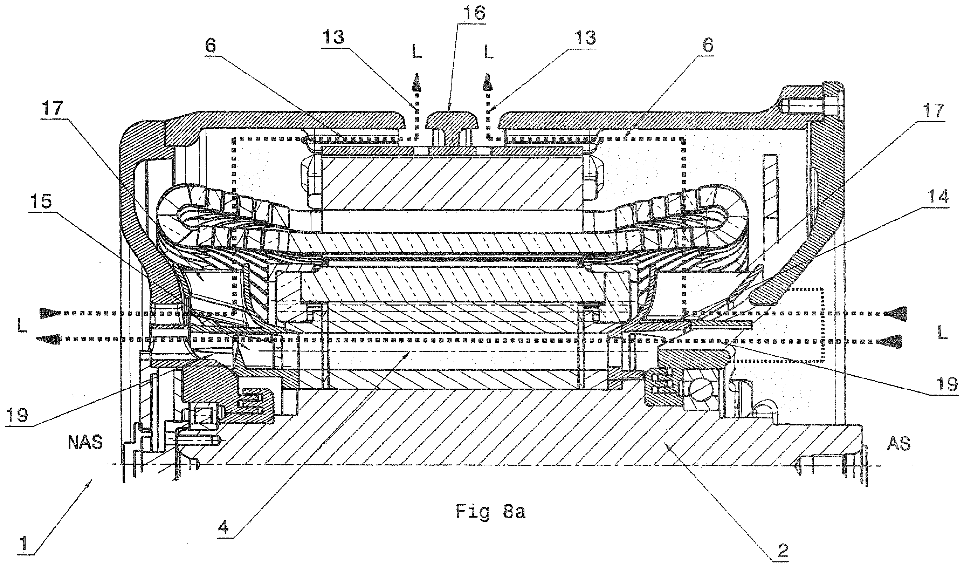

In Fig. 8a ist der Verlauf der Kühlluft L innerhalb der elektrischen Maschine 1 bei einer Drehrichtung dargestellt. Demnach werden bei Drehung der Rotorwelle 2 die beiden Lüfter 14, 15 in Drehung versetzt und dadurch die Kühlluft L von den Radiallüftern 17 beiderseits, also von der Antriebsseite AS und der Nichtantriebsseite NAS axial angesaugt und in radialer Richtung zu den Statorkühlkanälen 6 geführt. Die Kühlluft L strömt in Gegenrichtung bis zur Barriere 16 in den Statorkühlkanälen 6 und weiter zu den Luftauslässen 13 am Mantel des Gehäuserohres 7 der elektrischen Maschine 1. Ebenso wird die Kühlluft L je nach Gestaltung der Axiallüfter 19 der kombinierten Radial-/Axiallüfter 14, 15 an einer Seite, hier durch den Lüfter 15 an der Nichtantriebsseite NAS angesaugt und durch die Rotorkühlkanäle 4 gefördert. Der an der Antriebsseite AS angeordnete Lüfter 14 saugt die Kühlluft L avon außen an und bläst sie in axialer Richtung in die Rotorkühlkanäle 4.

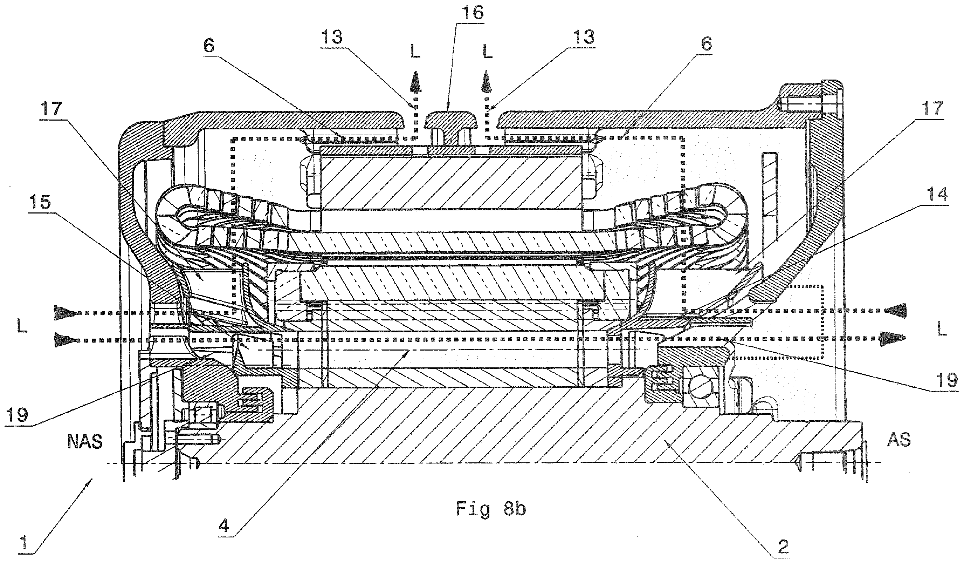

Fig. 8b zeigt den Fall einer gegenüber Fig. 8a gegenläufigen Drehrichtung der elektrischen Maschine 1. Die Radiallüfter 17 arbeiten unabhängig von der Drehrichtung der elektrischen Maschine 1 und saugen die Kühlluft L ebenso wie bei Fig. 8a beiderseits, also von der Antriebsseite AS und der Nichtantriebsseite NAS axial an und führen die Kühlluft L in radialer Richtung zu den Statorkühlkanälen 6. Dort strömt die Kühlluft L wiederum in Gegenrichtung bis zur Barriere 16 und den Luftauslässen 13. Die Axiallüfter 19 der kombinierten Radial-/Axiallüfter 14, 15 sind jedoch von der Drehrichtung der elektrischen Maschine abhängig, weshalb bei einer Änderung der Drehrichtung nunmehr der Lüfter 14 an der Antriebsseite AS die Kühlluft L aus den Rotorkühlkanälen 4 ansaugt und nach außen abbläst. Der an der Nichtantriebsseite NAS angeordnete Lüfter 15 saugt die Kühlluft L von außen an und fördert sie durch die Rotorkühlkanäle 4 von links nach rechts.

Somit ist bei beiden Drehrichtungen der elektrischen Maschine 1 eine Kühlung sowohl des Rotors als auch des Stators gewährleistet.

## Patentansprüche

1. Luftgekühlte elektrische Maschine (1) mit einem mit einer Rotorwelle (2) drehfest verbundenen Rotor (3) mit axial angeordneten Rotorkühlkanälen (4), einem Stator (5) mit axial angeordneten Statorkühlkanälen (6), einem Gehäuserohr (7), beiderseits angeordneten Lagerschilden (8, 9) enthaltend die Lager (10, 11) zur drehbaren Aufnahme der Rotorwelle (2), mit Lufteinlässen (12) und Luftauslässen (13), und mit beiderseits jeweils einem mit der Rotorwelle (2) verbundenen Lüfter (14, 15) zur Führung der Kühlluft (L) von den Lufteinlässen (12) durch die axialen Rotorkühlkanäle (4) und die axialen Statorkühlkanäle (6) zu den Luftauslässen (13), wobei jeder Lüfter (14, 15) durch einen kombinierten Radial-/Axiallüfter gebildet und unterhalb von Wickelköpfen (28) am Stator (5) angeordnet ist, wobei die Statorkühlkanäle (6) durch eine Barriere (16) unterbrochen sind und die Enden der Statorkühlkanäle (6) beiderseits der Barriere (16) mit am Mantel des Gehäuserohrs (7) angeordneten Luftauslässen (13) verbunden sind, sodass die Kühlluft (L) von den Lufteinlässen (12) einer Seite in einer axialen Richtung durch die axialen Rotorkühlkanäle (4) zur anderen Seite und getrennt davon von den Lufteinlässen (12) beiderseits in radialer Richtung über die Wickelköpfe (28) am Stator (5) und in Gegenrichtung durch die axialen Statorkühlkanäle (6) bis zur Barriere (16) und den am Mantel des Gehäuserohrs (7) angeordneten Luftauslässen (13) führbar ist.

2. Luftgekühlte elektrische Maschine (1) nach Anspruch 1, **dadurch gekennzeichnet, dass** die Lüfter (14, 15) durch einen außenliegenden, ringförmigen Radiallüfter (17) mit einer kreisförmigen Öffnung (18) und einem in dieser kreisförmigen Öffnung (18) des Radiallüfters (17) angeordneten Axiallüfter (19) gebildet ist.

3. Luftgekühlte elektrische Maschine (1) nach Anspruch 1, **dadurch gekennzeichnet, dass** die Lüfter (14, 15) durch einen Radiallüfter (17) mit axialen Bohrungen (31) gebildet sind, und die Lüfter (14, 15) unterschiedlich ausgebildet sind.

4. Luftgekühlte elektrische Maschine (1) nach Anspruch 3, **dadurch gekennzeichnet, dass** die Lüfter (14, 15) unterschiedlichen Außendurchmesser, Innendurchmesser, Breite der Schaufeln (20, 21), Anzahl der Schaufeln (20, 21) und bzw. oder Krümmung der Schaufeln (20, 21) aufweisen.

5. Luftgekühlte elektrische Maschine (1) nach einem der Ansprüche 1 bis 4, **dadurch gekennzeichnet, dass** die Lufteinlässe (12) in den Lagerschilden (8, 9) angeordnet sind.

6. Luftgekühlte elektrische Maschine (1) nach einem der Ansprüche 1 bis 5, **dadurch gekennzeichnet, dass** ein Luftauslass (13) in zumindest einem Lagerschild (8) angeordnet ist.

7. Luftgekühlte elektrische Maschine (1) nach einem der Ansprüche 1 bis 6, **dadurch gekennzeichnet, dass** Elemente (22) zum Leiten der Kühlluft (L) vorgesehen sind, und die Leitelemente (22) vorzugsweise im Bereich der Lufteinlässe (12) angeordnet sind, und die Leitelemente (22) vorzugsweise einstückig mit den Lagerschilden (8, 9) hergestellt sind.

8. Luftgekühlte elektrische Maschine (1) nach einem der Ansprüche 1 bis 7, **dadurch gekennzeichnet, dass** die axialen Statorkühlkanäle (6) durch Nuten (23) an der Oberfläche des Stators (5) gebildet sind, und die Barrieren (16) in den Statorkühlkanälen (6) durch einen an der Innenseite des Gehäuserohres (7) angeordneten Ring (24) gebildet sind.

9. Luftgekühlte elektrische Maschine (1) nach einem der Ansprüche 1 bis 7, **dadurch gekennzeichnet, dass** die Statorkühlkanäle (6) durch axiale Nuten (25) an der Innenseite des Gehäuserohres (7) gebildet sind.

10. Luftgekühlte elektrische Maschine (1) nach einem der Ansprüche 1 bis 7, **dadurch gekennzeichnet, dass** die Statorkühlkanäle (6) durch Bohrungen (26) im Stator (5) gebildet sind.

11. Luftgekühlte elektrische Maschine (1) nach Anspruch 10, **dadurch gekennzeichnet, dass** der Stator (5) durch Statorbleche (27) gebildet ist, wobei die Statorkühlkanäle (6) durch Bohrungen (26) in den Statorblechen (27) und die Barriere (16) durch volle Statorbleche (27) gebildet sind.

12. Luftgekühlte elektrische Maschine (1) nach einem der Ansprüche 1 bis 11, **dadurch gekennzeichnet, dass** an den Lagerschilden (8, 9) Kühlrippen (29) angeordnet sind.

13. Luftgekühlte elektrische Maschine (1) nach einem der Ansprüche 1 bis 12, **dadurch gekennzeichnet, dass** an den Lufteinlässen (12) und allenfalls Luftauslässen (13) Filter (30) angeordnet sind.

14. Luftgekühlte elektrische Maschine (1) nach einem der Ansprüche 1 bis 13, **dadurch gekennzeichnet, dass** die Lüfter (14, 15) aus Stahl, Aluminium oder einer Aluminiumlegierung gebildet sind, und das Gehäuserohr (7) und bzw. oder die Lagerschilde (8, 9) aus Aluminium oder einer Aluminiumlegierung durch Gießen hergestellt ist.

## Claims

1. Air-cooled electric machine (1), with a rotor (3), connected in a torsionally resistant manner to a rotor shaft (2), with axially arranged rotor cooling channels (4), a stator (5) with axially arranged stator cooling channels (6), a housing tube (7), bearing shields (8, 9) arranged on both sides and containing the bearings (10, 11), for the rotatable accommodation of the rotor shaft (2), with air inlets (12) and air outlets (13), and in each case, on both sides, with fans (14, 15) connected to the rotor shaft (2) for the conveying of the cooling air (L) from the air inlets (12), through the axial rotor cooling channels (4) and the axial stator cooling channels (6), to the air outlets (13), wherein each fan (14, 15) is formed by a combined radial/axial fan, and is arranged beneath winding heads (28) at the stator (5), wherein the stator cooling channels (6) are interrupted by a barrier (16), and the ends of the stator cooling channels (6) on both sides of the barrier (16) are connected to air outlets (13) arranged at the casing of the housing tube (7), such that the cooling air (L) can be conveyed from the air inlets (12) of one side, in an axial direction through the axial rotor cooling channels (4), to the other side, and, separated from this, from the air inlets (12) on both sides, in a radial direction over the winding heads (28) at the stator (5), and in the opposite direction through the axial stator cooling channels (6) as far as the barrier (16) and to the air outlets (13) arranged at the casing of the housing tube (7).

2. Air-cooled electric machine (1) according to claim 1, **characterized in that** the fans (14, 15) are formed by an outer ring-shaped radial fan (17), with a circular opening (18) and an axial fan (19) arranged in this circular opening (18) of the radial fan (17).

3. Air-cooled electric machine (1) according to claim 1, **characterized in that** the fans (14, 15) are formed by a radial fan (17) with axial boreholes (31), and the fans (14, 15) are of different configurations.

4. Air-cooled electric machine (1) according to claim 3, **characterized in that** the fans (14, 15) exhibit different outer diameter, inner diameter, width of blades (20, 21), number of blades (20, 21), and/or curvature of the blades (20, 21).

5. Air-cooled electric machine (1) according to any one of claims 1 to 4, **characterized in that** the air inlets (12) are arranged in the bearing shields (8, 9).

6. Air-cooled electric machine (1) according to any one of claims 1 to 5, **characterized in that** one air outlet (13) is arranged in at least one bearing shield (8).

7. Air-cooled electric machine (1) according to any one of claims 1 to 6, **characterized in that** elements (22) are provided for conveying the cooling air (L), and the conveying elements (22) are preferably arranged in the region of the air inlets (12), and the conveying elements (22) are preferably produced as being of one piece with the bearing shields (8, 9).

8. Air-cooled electric machine (1) according to any one of claims 1 to 7, **characterized in that** the axial stator cooling channels (6) are formed by slots (23) on the surface of the stator (5), and the barriers (16) are formed in the stator cooling channels (6) by a ring (24) arranged on the inner side of the housing tube (7).

9. Air-cooled electric machine (1) according to any one of claims 1 to 7, **characterized in that** the stator cooling channels (6) are formed by axial slots (25) on the inner side of the housing tube (7).

10. Air-cooled electric machine (1) according to any one of claims 1 to 7, **characterized in that** the stator cooling channels (6) are formed by boreholes (26) in the stator (5).

11. Air-cooled electric machine (1) according to claim 10, **characterized in that** the stator (5) is formed by stator plates (27), wherein the stator cooling channels (6) are formed by boreholes (26) in the stator plates (27) and the barriers (16) are formed by full stator plates (27).

12. Air-cooled electric machine (1) according to any one of claims 1 to 11, **characterized in that** cooling ribs (29) are arranged at the bearing shields (8, 9).

13. Air-cooled electric machine (1) according to any one of claims 1 to 12, **characterized in that** filters (30) are arranged at the air inlets (12), and if necessary at the air outlets (13).

14. Air-cooled electric machine (1) according to any one of claims 1 to 13, **characterized in that** the fans (14, 15) are formed from steel, aluminium, or an aluminium alloy, and the housing tube (7) and/or the bearing shields (8, 9) are produced from aluminium or an aluminium alloy by casting.

## Revendications

1. Moteur (1) électrique refroidi par air, avec un rotor (3) raccordé, de façon bloquée en rotation, à un arbre de rotor (2), avec des canaux de refroidissement de rotor (4) disposés axialement, un stator (5) avec des canaux de refroidissement de stator (6) disposés axialement, un boîtier tubulaire (7), des flasques (8, 9) disposés des deux côtés contenant les paliers (10, 11) destinés à la réception rotative de l'arbre de rotor (2), avec des admissions d'air (12) et des évacuations d'air (13), et avec des deux côtés respectivement un ventilateur (14, 15) raccordé à l'arbre de rotor (2) pour le guidage de l'air de refroidissement (L) à partir des admissions d'air (12) vers les évacuations d'air (13) à travers les canaux de refroidissement de rotor (4) axiaux et les canaux de refroidissement de stator (6) axiaux,
chaque ventilateur (14, 15) étant formé par un ventilateur radial/axial combiné et disposé au-dessous de têtes d'enroulement (28) sur le stator (5),
les canaux de refroidissement de stator (6) étant interrompus par une barrière (16), et les extrémités des canaux de refroidissement de stator (6) étant, des deux côtés de la barrière (16), raccordées à des évacuations d'air (13) disposées sur l'enveloppe du boîtier tubulaire (7) de telle sorte que l'air de refroidissement (L) peut être conduit à partir des admissions d'air (12) d'un côté dans une direction axiale à travers les canaux de refroidissement de rotor (4) axiaux vers l'autre côté et, séparément de cela, à partir des admissions d'air (12) des deux côtés dans la direction radiale via les têtes d'enroulement (28) sur le stator (5) et, dans la direction inverse, à travers les canaux de refroidissement de stator (6) axiaux jusqu'à la barrière (16) et aux évacuations d'air (13) disposées sur l'enveloppe du boîtier tubulaire (7).

2. Moteur (1) électrique refroidi par air selon la revendication 1, **caractérisé en ce que** les ventilateurs (14, 15) sont formés par un ventilateur radial (17) annulaire extérieur avec une ouverture (18) circulaire et par un ventilateur axial (19) disposé dans cette ouverture (18) circulaire du ventilateur radial (17).

3. Moteur (1) électrique refroidi par air selon la revendication 1, **caractérisé en ce que** les ventilateurs (14, 15) sont formés par un ventilateur radial (17) avec des alésages (31) axiaux, et les ventilateurs (14, 15) sont constitués de façon différente.

4. Moteur (1) électrique refroidi par air selon la revendication 3, **caractérisé en ce que** les ventilateurs (14, 15) présentent un diamètre extérieur différent, un diamètre intérieur différent, une largeur des pales (20, 21) différente, un nombre de pales (20, 21) différent et, respectivement ou, une courbure des pales différente (20, 21).

5. Moteur (1) électrique refroidi par air selon l'une des revendications 1 à 4, **caractérisé en ce que** les admissions d'air (12) sont disposées dans les flasques (8, 9).

6. Moteur (1) électrique refroidi par air selon l'une des revendications 1 à 5, **caractérisé en ce qu'**une évacuation d'air (13) est disposée dans au moins un flasque (8).

7. Moteur (1) électrique refroidi par air selon l'une des revendications 1 à 6, **caractérisé en ce qu'**il est prévu des éléments (22) destinés à guider l'air de refroidissement (L), et les éléments de guidage (22) sont de préférence disposés dans la zone des admissions d'air (12), et les éléments de guidage (22) sont de préférence fabriqués d'une seule pièce avec les flasques (8, 9).

8. Moteur (1) électrique refroidi par air selon l'une des revendications 1 à 7, **caractérisé en ce que** les canaux de refroidissement de stator (6) axiaux sont formés par des rainures (23) sur la surface du stator (5), et les barrières (16) sont formées dans les canaux de refroidissement de stator (6) par un anneau (24) disposé sur le côté intérieur du boîtier tubulaire (7).

9. Moteur (1) électrique refroidi par air selon l'une des revendications 1 à 7, **caractérisé en ce que** les canaux de refroidissement de stator (6) sont formés par des rainures (25) axiales sur le côté intérieur du boîtier tubulaire (7).

10. Moteur (1) électrique refroidi par air selon l'une des revendications 1 à 7, **caractérisé en ce que** les canaux de refroidissement de stator (6) sont formés par des alésages (26) dans le stator (5).

11. Moteur (1) électrique refroidi par air selon la revendication 10, **caractérisé en ce que** le stator (5) est formé par des tôles de stator (27), les canaux de refroidissement de stator (6) étant formés par des alésages (26) dans les tôles de stator (27), et la barrière (16) étant formée par des tôles de stator (27) pleines.

12. Moteur (1) électrique refroidi par air selon l'une des revendications 1 à 11, **caractérisé en ce que** des ailettes de refroidissement (29) sont disposées sur les flasques (8, 9).

13. Moteur (1) électrique refroidi par air selon l'une des revendications 1 à 12, **caractérisé en ce que** des filtres (30) sont disposés sur les admissions d'air (12) et éventuellement sur les évacuations d'air (13).

14. Moteur (1) électrique refroidi par air selon l'une des revendications 1 à 13, **caractérisé en ce que** les ventilateurs (14, 15) sont formés en acier, en aluminium ou en un alliage d'aluminium, et le boîtier tubulaire (7) et, respectivement ou, les flasques (8, 9) sont fabriqués en aluminium ou en un alliage d'aluminium par coulée.
